# EUROPÄISCHE PATENTSCHRIFT

(11) **EP 2 294 300 B1**
(45) Veröffentlichungstag und Bekanntmachung des Hinweises auf die Patenterteilung: **21.01.2015**
(21) Anmeldenummer: 09769117.4
(22) Anmeldetag: 09.06.2009
(51) Int. Cl.: F02D 9/10

(54) **AKTUATOR**
ACTUATOR
ACTIONNEUR

(30) Priorität: 24.06.2008 DE 102008030003
(43) Veröffentlichungstag der Anmeldung: 16.03.2011
(73) Patentinhaber: Mahle International GmbH, 70376 Stuttgart (DE)
(72) Erfinder: WEBER, Thomas, 73650 Winterbach (DE)
(74) Vertreter: BRP Renaud & Partner mbB Rechtsanwälte Patentanwälte Steuerberater
(86) Internationale Anmeldenummer: PCT/EP2009/057086
(87) Internationale Veröffentlichungsnummer: WO 2009/156268

(56) Entgegenhaltungen:
- EP-A- 1 281 849
- EP-A- 1 777 150
- DE-A1- 10 351 382
- US-A1- 2004 123 838

## Beschreibung

Die vorliegende Erfindung betrifft einen Aktuator, insbesondere für eine Fahrzeugstelleinrichtung.

Stelleinrichtungen dieser Art können bei Fahrzeugen beispielsweise als Klappenstelleinrichtungen zum Einsatz kommen, bei denen zumindest ein Stellglied eine Klappe ist, mit der ein durchströmbarer Querschnitt in einer Gas führenden Leitung des Fahrzeugs steuerbar ist. Eine derartige Klappenstelleinrichtung kann beispielsweise in einem Frischgastrakt oder in einem Abgastrakt einer BrennKraftmaschine wie im DE-10351382 dargestellt oder einer Brennstoffzelle des Fahrzeugs zur Anwendung kommen. Ebenso sind Stelleinrichtungen zum Verstellen einer Leitschaufelgeometrie bei einer Turbine eines Abgasturboladers bekannt. Ferner kann auch ein sogenanntes "Waste-Gate" eines Abgasturboladers mittels einer solchen Stelleinrichtung betätigt werden.

Die vorliegende Erfindung beschäftigt sich mit dem Problem, für einen Aktuator der eingangs genannten Art bzw. für einen damit ausgestatteten Stellantrieb eine verbesserte Ausführungsform anzugeben, die sich insbesondere dadurch auszeichnet, dass sie kompakt baut und/oder vergleichsweise große Stellkräfte bzw. Stellmomente erzeugen kann und/oder eine vereinfachte Montage ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Aktuator, dessen Elektromotor durch eine Einführöffnung in ein Gehäuse einführbar ist, einen Deckel zum Verschließen der Einführöffnung als Schraubdeckel auszugestalten, der einen Topfabschnitt mit einer zylindrischen Wand und einem Boden aufweist und so abgestimmt ist, dass der Elektromotor bei an- oder aufgeschraubtem Deckel axial am Boden des Deckels anliegt. Auf diese Weise kann mit dem Deckel eine axiale Vorspannung oder Verspannung des Elektromotors realisiert werden. Insbesondere lassen sich dadurch Herstellungstoleranzen ausgleichen, um eine spielfreie Positionierung des Elektromotors im Gehäuse zu ermöglichen.

Bei einer vorteilhaften Ausführungsform kann der Deckel zwischen dem Topfabschnitt und einem Gewindeabschnitt einen als axiale Zugfeder ausgestalteten Übergangsabschnitt aufweisen. Dieser Übergangsabschnitt wird beim Festziehen des schraubbaren Deckels gespannt, wodurch eine axiale Vorspannkraft auf den Elektromotor aufgebracht werden kann. Gleichzeitig ermöglicht der federelastische Übergangsbereich thermisch bedingte Relativbewegungen zwischen dem Elektromotor und dem Gehäuse mit Deckel. Derartige Relativbewegungen können aufgrund unterschiedlicher Wärmedehnungskoeffizienten des Elektromotors einerseits und des Gehäuses sowie des Deckels andererseits im Betrieb des Aktuators entstehen. Da der federelastische Übergangsbereich derartige Relativbewegungen zulässt und dabei stets eine hinreichende axiale Verspannung des Elektromotors gewährleistet, können innerhalb des Aktuators thermisch bedingte Spannungsspitzen vermieden werden, was die Dauerhaltbarkeit des Aktuators auch in einer Umgebung mit häufig wechselnden Temperaturen begünstigt.

Darüber hinaus kann in den Deckel am Boden des Topfabschnitts zentral eine topfförmige Mulde eingearbeitet sein, in die ein zylindrischer Vorsprung des Elektromotors hineinragen kann. Bei diesem zylindrischen Vorsprung kann es sich beispielsweise um ein Lager für eine Antriebswelle des Elektromotors handeln. Die in den Boden des Deckels integrierte Mulde ermöglicht somit eine Positionierung des genannten Vorsprungs, also insbesondere eines Wellenlagers. Dies ist insbesondere bei vergleichsweise großen Kräften bzw. Momenten zur Erzielung einer erhöhten Dauerhaltbarkeit von Vorteil.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische Ansicht einer Stelleinrichtung,
- Fig. 2: eine perspektivische, teilweise geschnittene Ansicht eines Aktuators,
- Fig. 3: einen Längsschnitt durch ein Getriebe des Aktuators,
- Fig. 4: eine perspektivische Ansicht des teilweise geschnittenen Aktuators in auseinander gezogener Darstellung,
- Fig. 5: eine perspektivische, teilweise geschnittene Ansicht des Aktuators,
- Fig. 6: eine perspektivische Ansicht des Getriebes des Aktuators in einer auseinander gezogenen Darstellung bei einer anderen Ausführungsform,
- Fig. 7: eine perspektivische, teilweise geschnittene Ansicht des Aktuators aus Fig. 6,
- Fig. 8: eine perspektivische, teilweise geschnittene Ansicht des Aktuators im Bereich eines Elektromotors, bei verschlossener Einführöffnung,
- Fig. 9: eine perspektivische Ansicht des Aktuators aus Fig. 8 in einer auseinander gezogenen Darstellung,
- Fig. 10: eine perspektivische Ansicht eines Kegelgetriebes,
- Fig. 11: eine Draufsicht des Kegelgetriebes,
- Fig. 12: eine Schnittansicht des Kegelgetriebes,
- Fig. 13: eine vergrößerte Ansicht eines Kegelrads des Kegelgetriebes,
- Fig. 14: ein vergrößerter Ausschnitt XIV des Kegelrads aus Fig. 13, und
- Fig. 15: eine vergrößerte Draufsicht auf einen Zahn des Kegelrads entsprechend einer Blickrichtung XV in Fig. 14.

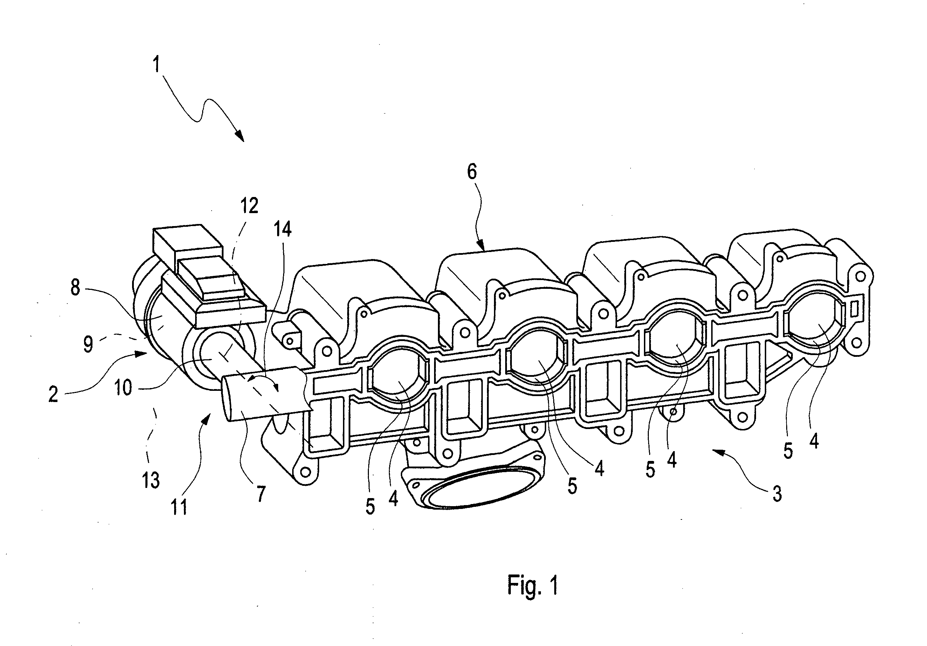

Entsprechend Fig. 1 umfasst eine Stelleinrichtung 1, die insbesondere fest in einem Kraftfahrzeug eingebaut sein kann, einen Aktuator 2 sowie eine Stellgliedanordnung 3. Im Beispiel besitzt die Stellgliedanordnung 3 mehrere, hier vier Stellglieder 4, die exemplarisch als Klappen ausgestaltet sind. Dementsprechend handelt es sich bei der Verstelleinrichtung 1 exemplarisch um eine Klappenstelleinrichtung. Dabei dient das jeweilige Stellglied 4, also die jeweilige Klappe 4 zum Steuern eines durchströmbaren Querschnitts in einer durchströmbaren Leitung 5, und zwar bevorzugt in einem Fahrzeug. Beispielsweise ist die Stelleinrichtung 1 in einem Frischgastrakt einer Brennkraftmaschine eines Fahrzeugs angeordnet und kann dort als Tumbleklappe und/oder als Drallklappe ausgestaltet sein. Im Beispiel ist die Stelleinrichtung 1 in ein Saugmodul 6 integriert, mit dem Frischgas auf die einzelnen Brennräume einer Brennkraftmaschine verteilt wird. Ebenso ist es grundsätzlich möglich, die Stelleinrichtung 1 z.B. bei einem Brennstoffzellensystem beispielsweise zum Steuern des Anodengases oder des Kathodengases oder des Abgases zu verwenden.

Die Stelleinrichtung 1 umfasst eine Betätigungswelle 7, mit deren Hilfe die Stellglieder 4 betätigbar sind. Hierzu ist die Betätigungswelle 7 um ihre Längsmittelachse drehend antreibbar, während die Stellglieder 4 mehr oder weniger drehfest mit der Betätigungswelle 7 verbunden sind.

Der Aktuator 2 besitzt ein Gehäuse 8, in dem ein Elektromotor 9 angeordnet ist. Mit dem Elektromotor 9 ist eine Abtriebswelle 10 des Aktuators 2 drehend antreibbar. Dabei dreht die Antriebswelle 10 um ihre Längsmittelachse. Zur Drehmomentübertragung zwischen der Abtriebswelle 10 und der Betätigungswelle 7 ist ein Kegelgetriebe 11 vorgesehen. Die Abtriebswelle 10 und die Betätigungswelle 7 sind relativ zueinander so orientiert, dass zwischen einer Rotationsachse 12 der Abtriebswelle 10 und einer Rotationsachse 13 der Betätigungswelle 7 ein Winkel 14 vorliegt, der in einem Bereich von einschließlich 60° bis einschließlich 120° liegt und der im gezeigten, bevorzugten Ausführungsbeispiel bei etwa 90° liegt.

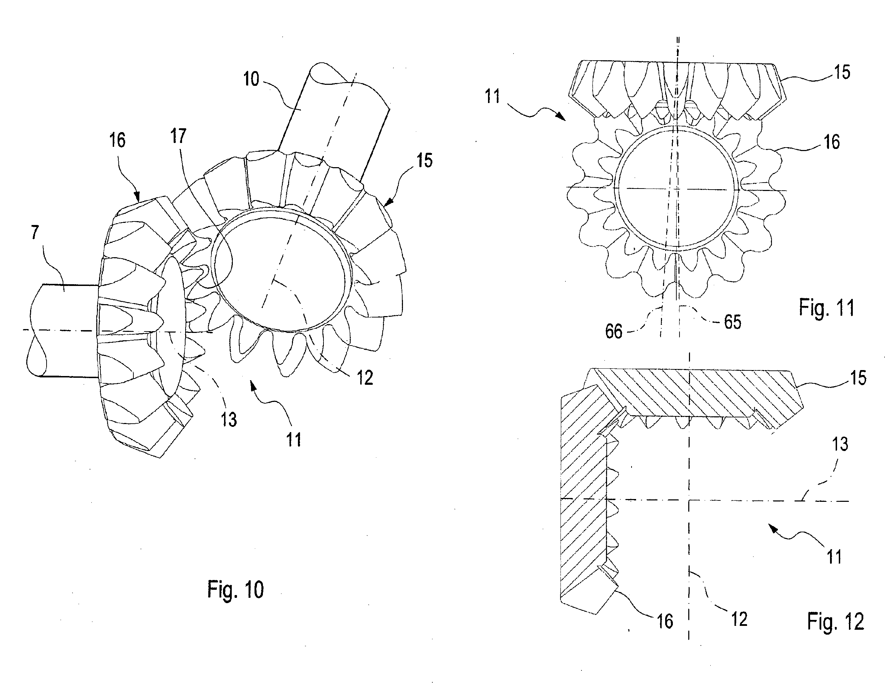

Entsprechend Fig. 10 umfasst das Kegelgetriebe 11 zwei Kegelräder, nämlich ein erstes Kegelrad 15 und ein zweites Kegelrad 16, die in einem Eingriffsbereich 17 miteinander in Eingriff stehen, um die gewünschte Drehmomentübertragung zwischen den Kegelrädern 15, 16 zu realisieren. Das erste Kegelrad 15 ist mit der Abtriebswelle 10 fest verbunden und ist bezüglich der Rotationsachse 12 der Abtriebswelle 10 koaxial angeordnet. Auf entsprechende Weise ist das zweite Kegelrad 16 drehfest mit der Betätigungswelle 7 verbunden und koaxial zur Rotationsachse 13 der Betätigungswelle 7 orientiert. Die drehfeste Kopplung zwischen dem jeweiligen Kegelrad 15, 16 und der jeweiligen Welle 7, 10 kann beispielsweise durch einen Presssitz und/oder durch Formschluss realisiert werden. Ebenso können die Kegelräder 15, 16 mit den Wellen 7, 10 verschweißt und/oder verklebt und/oder verschraubt werden.

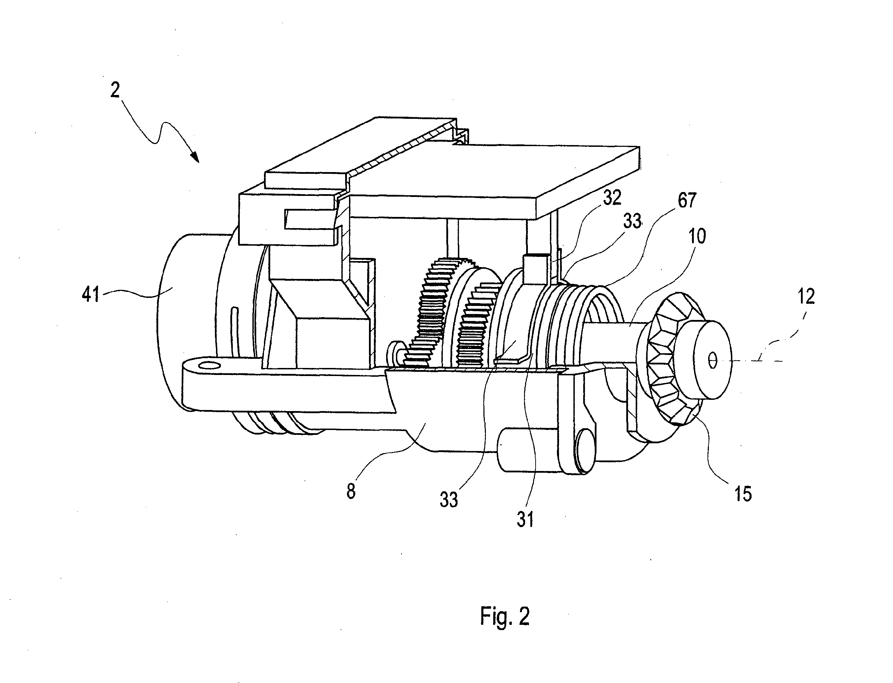

Entsprechend den Fig. 2 bis 7 besitzt der Elektromotor 9 eine drehend antreibbare Antriebswelle 18, die hinsichtlich ihrer Rotationsachse zweckmäßig koaxial zur Rotationsachse 12 der Abtriebswelle 10 orientiert ist. Der Aktuator 2 enthält in seinem Gehäuse 8 ein Planetengetriebe 19. Über dieses Planetengetriebe 19 ist die Antriebswelle 18 mit der Abtriebswelle 10 antriebsverbunden. Das Planetengetriebe 19 besitzt zumindest eine Getriebestufe 20 bzw. 21. Im Beispiel sind genau zwei solche Getriebestufen 20, 21 vorgesehen. Es ist klar, dass bei anderen Ausführungsformen auch nur eine oder drei oder mehr derartige Getriebestufen 20, 21 vorgesehen sein können.

Jede Getriebestufe 20, 21 besitzt ein Sonnenrad 22 bzw. 23 sowie wenigstens zwei Planetenräder 24. Im Beispiel weist jede Getriebestufe 20, 21 drei Planetenräder 24 auf. Das jeweilige Sonnenrad 22, 23 steht mit den zugehörigen Planetenrädern 24 in Eingriff. Die Planetenräder 24 sind jeweils an einem Planetenradträger 25 drehbar gelagert und stehen außerdem mit einem Hohlrad 26 in Eingriff. Dabei ist für beide Getriebestufen 20, 21 hier ein gemeinsames Hohlrad 26 vorgesehen, mit dem alle Planetenräder 24 der beiden Getriebestufen 20, 21 in Eingriff stehen. Bei genau zwei Getriebestufen 20, 21 ist die eine eine antriebsseitige Getriebestufe 20, während die andere eine abtriebsseitige Getriebestufe 21 ist. Bei drei oder mehr Getriebestufen 20, 21 sind zwischen der antriebsseitigen und der abtriebsseitigen Getriebestufe zumindest eine oder mehrere Zwischenstufen angeordnet. Bei der antriebsseitigen Getriebestufe 20 ist das Sonnenrad 22 drehfest mit der Antriebswelle 18 verbunden. Im Unterschied dazu ist bei der abtriebsseitigen Getriebestufe 21 der Planetenradträger 25 mit der Abtriebswelle 10 drehfest verbunden. Dabei ist zwischen der Abtriebswelle 10 und dem jeweiligen Planetenradträger 25 ein axialer Eingriff vorgesehen, der auf einem möglichst großen Durchmesser erfolgt, um möglichst große Drehmomente übertragen zu können. Dieser Drehmoment übertragende Eingriff kann beispielsweise als Steckverbindung ausgestaltet sein.

Bei der hier vorgestellten bevorzugten Ausführungsform sind die Planetenräder 24 der Getriebestufen 20, 21 Gleichteile. Außerdem sind die Planetenradträger 25 als Gleichteile ausgestaltet. Im Beispiel ist der jeweilige Planetenradträger 25 drehfest mit dem Sonnenrad 23 der jeweils nachfolgenden Getriebestufe verbunden. Dies wird bevorzugt dadurch realisiert, dass das jeweilige Sonnenrad 23 der Folgestufe integral mit dem Planetenradträger 25 der vorausgehenden Stufe hergestellt ist. Da die Planetenradträger 25 hier Gleichteile sind, wird auch der Planetenradträger 25 der abtriebsseitigen Getriebestufe 21 mit einem derartigen Sonnenrad 23 versehen, obwohl er an sich kein derartiges Sonnenrad 23 benötigt, da die Drehmomentübertragung zur Abtriebswelle 10 zweckmäßig nicht über dieses zusätzliche Sonnenrad 23, sondern auf andere Weise erfolgt, nämlich bevorzugt auf einem größeren Durchmesser unmittelbar über den Planetenradträger 25.

Das Sonnenrad 22 der eingangsseitigen Getriebestufe 20 ist drehfest mit der Antriebswelle 18 verbunden und ist daher insbesondere kein Gleichteil zu den Sonnenrädern 23 der Planetenradträger 25. Im Unterschied dazu können die Sonnenräder 23 der auf die eingangsseitige Getriebestufe 20 folgenden Getriebestufen wieder als Gleichteile ausgestaltet sein. Ebenso ist es möglich, alle Sonneräder 22, 23 als Gleichteile auszugestalten, wenn sie separat von den Planetenradträgern 25 hergestellt werden und im Rahmen der Montage auf geeignete Weise drehfest mit der Antriebswelle 18 bzw. mit dem jeweiligen Planetenradträger 25 verbunden werden.

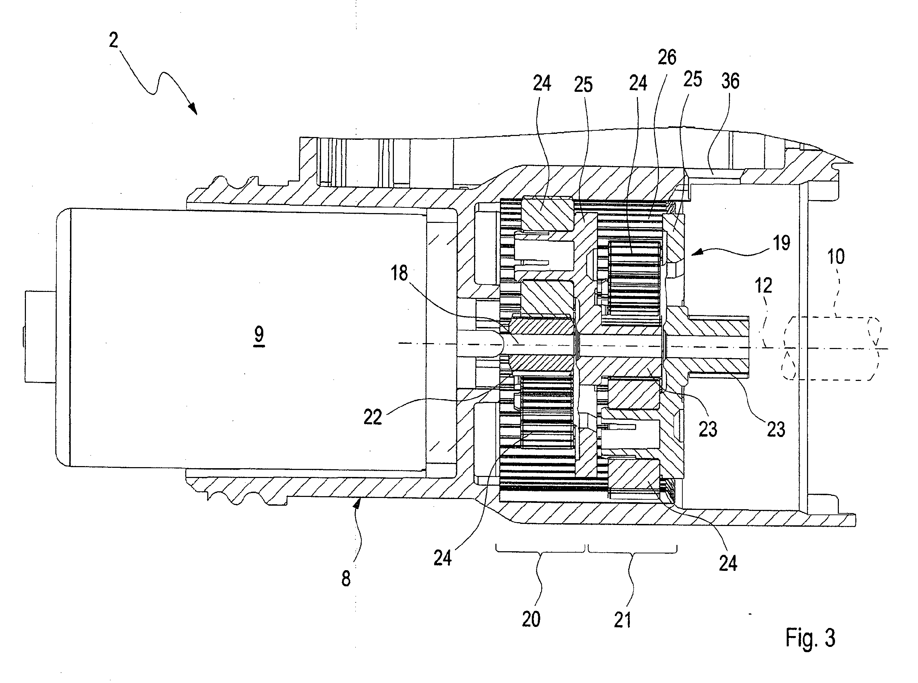

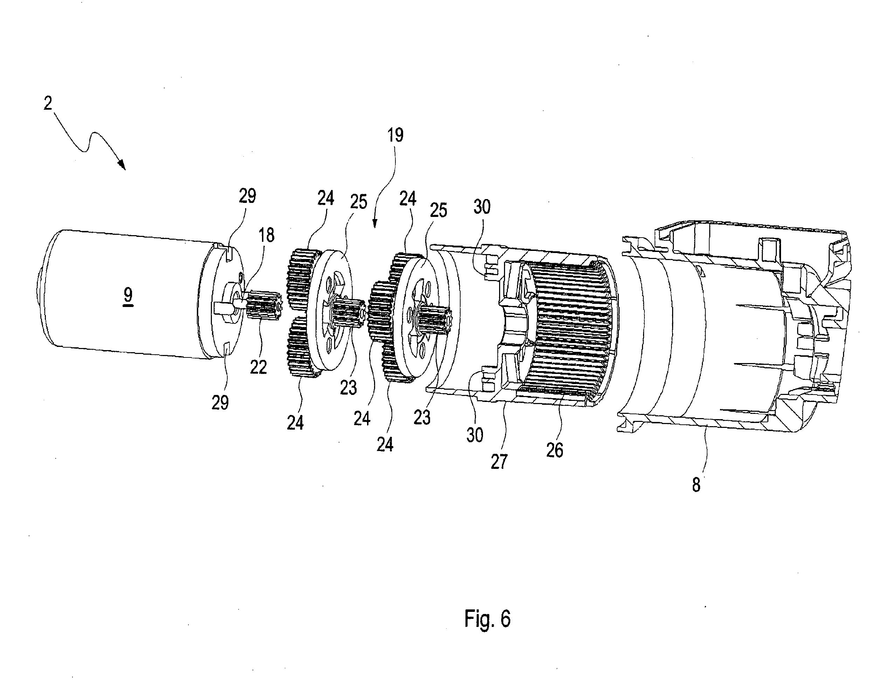

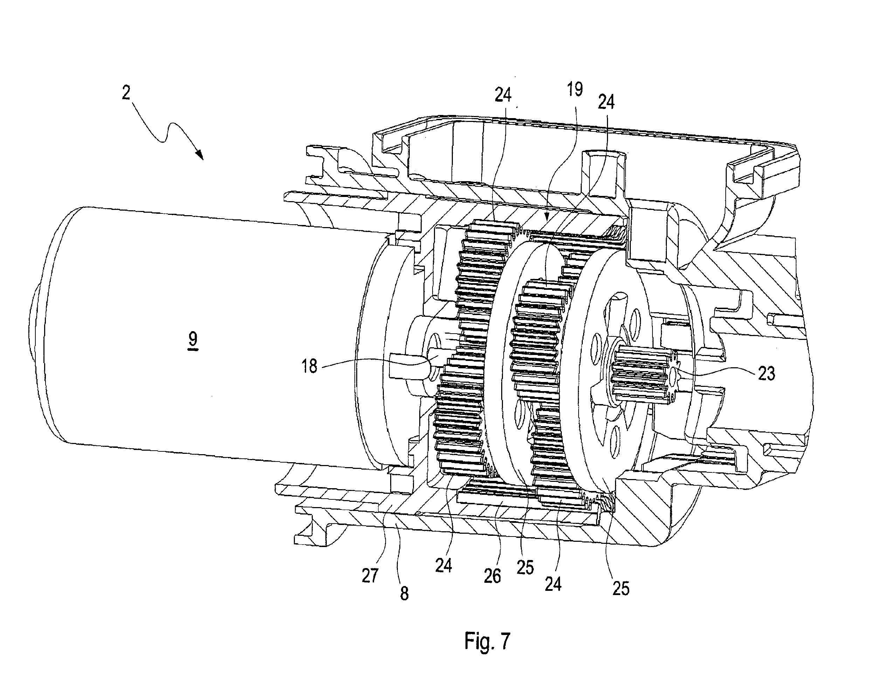

Bei den Ausführungsformen der Fig. 3 bis 5 bildet das Hohlrad 26 einen integralen Bestandteil des Gehäuses 8, das zur Aufnahme des Elektromotors 9 dient. Im Unterschied dazu zeigen die Fig. 6 und 7 eine Ausführungsform, bei welcher das Hohlrad 26 in einem Einsatzteil 27 ausgebildet ist, das bezüglich des übrigen Gehäuses 8 ein separates Bauteil bildet. Durch die Verwendung eines derartigen Einsatzteils 27 kann die Vormontierbarkeit des Planetengetriebes 19 verbessert werden.

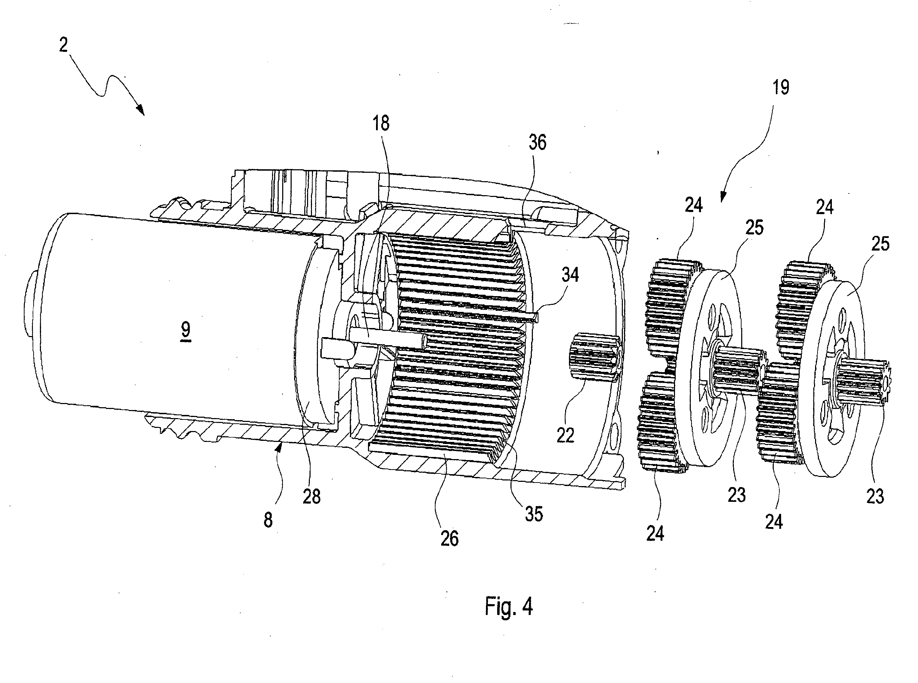

Der Elektromotor 9 besitzt entsprechend den Fig. 4 bis 7 an seinem dem Planetengetriebe 19 zugewandten vorderen Ende 28 zumindest eine, hier zwei Aussparungen 29. Im eingebauten Zustand greifen in diese Aussparungen 29 komplementäre Stege 30 axial ein. Diese Stege 30 sind integrale Bestandteile des Gehäuses 8 bzw. des Einsatzteils 27. Hierdurch wird im Einbauzustand eine Drehmomentabstützung zwischen dem Elektromotor 9 und dem Gehäuse 8 bzw. dem Einsatzteil 27 realisiert.

Das Gehäuse 8 nimmt den Elektromotor 9 und das Planetengetriebe 19 auf bzw. das Einsatzteil 27. Gemäß Fig. 1 ist die Abtriebswelle 10 aus dem Gehäuse 8 herausgeführt und außerhalb des Gehäuses 8 drehfest mit einem Antriebsglied verbunden, das im gezeigten Beispiel durch das erste Kegelrad 15 gebildet ist. Grundsätzlich kann es sich bei dem mit der Antriebswelle 10 antreibbaren Antriebsglied um ein beliebiges Antriebsglied handeln, wie z.B. ein Ritzel oder ein Hebel oder ein Zahnrad oder ein Kupplungselement oder eine Kupplung zur direkten Drehmomentübertragung oder eine beliebige Kombination der vorstehend genannten Antriebsglieder.

Entsprechend Fig. 2 kann eine der Wellen des Aktuators 2 innerhalb des Gehäuses 8 mit einem Signalgeber 31 ausgestattet sein. Im Beispiel ist die Abtriebswelle 10 drehfest mit dem Signalgeber 31 verbunden, so dass eine Rotation der Abtriebswelle 10 mit einer Rotation des Signalgebers 31 einhergeht. Des Weiteren enthält das Gehäuse 8 einen Drehwinkelsensor 32, der so ausgestaltet ist, dass er mit dem Signalgeber 31 berührungslos zusammenwirkt. Insbesondere handelt es sich beim Drehwinkelsensor 32 um einen Hallsensor, der im Folgenden ebenfalls mit 32 bezeichnet wird. Der Hallsensor 32 detektiert Änderungen eines magnetischen Feldes. Zweckmäßig wird als Signalgeber 31 daher ein Permanentmagnet verwendet, der im Folgenden ebenfalls mit 31 bezeichnet wird. Der Permanentmagnet 31 ist drehfest mit der Abtriebswelle 10 verbunden und dabei so polarisiert, dass eine Drehbewegung die Abtriebswelle 10 das magnetische Feld im Bereich des Hallsensors 32 verändert. Hierdurch kann der Hallsensor 32 die Rotation der Abtriebswelle 10 detektieren.

Um die Genauigkeit des Drehwinkelsensors 32 bzw. die winkelmäßige Auflösung des Drehwinkelsensors 32 zu verbessern, sind hier zwei Leitelemente 33 vorgesehen. Diese sind so ausgestaltet, dass sie ein magnetisches Feld des Permanentmagneten 31 zumindest teilweise zum Hallsensor 32 umleiten. Beispielsweise können derartige Leitelemente 33 durch Metallblech gebildet sein. Die Leitelemente 33 erstrecken sich ausgehend vom Hallsensor 32 radial beabstandet zum Permanentmagneten 31 und bezogen auf die Rotationsachse 12 der Abtriebswelle 10 in Umfangsrichtung. Beispielsweise erstreckt sich jedes Leitelement 33 um etwa 90°, so dass sie zusammen den Permanentmagneten 31 etwa um 180° umgreifen.

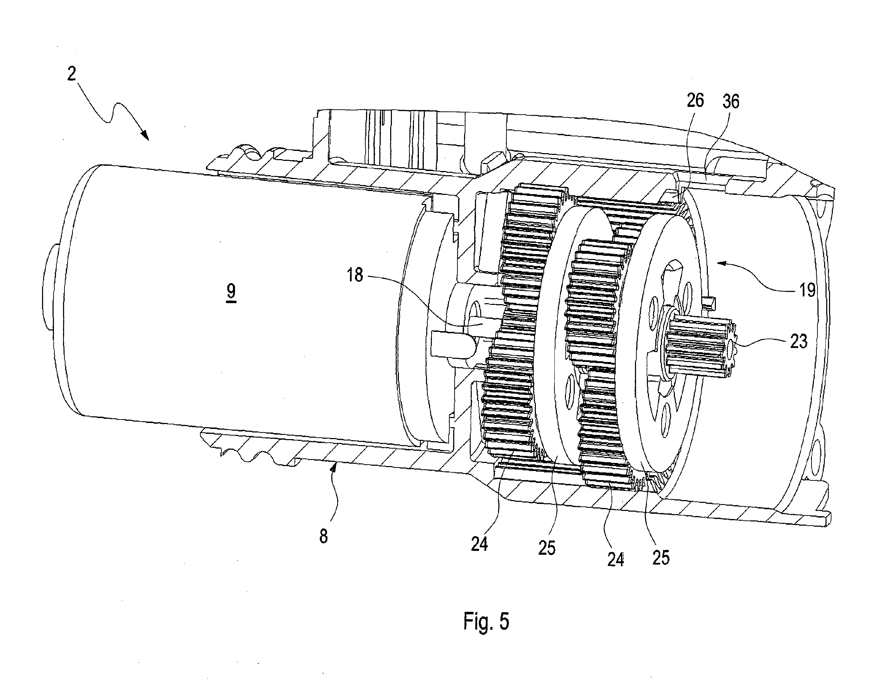

Zur axialen Positionierung der Leitelemente 33 kann es gemäß Fig. 4 und 5 vorgesehen sein, einzelne Zähne 34 einer Verzahnung 35 des Hohlrades 26 axial an einer vom Elektromotor 9 abgewandten Seite zu verlängern. An diesem axial verlängerten Zahn 34 kann das jeweilige Leitelement 33 axial zur Anlage kommen, wodurch es im Gehäuse 8 stabil positioniert ist. Das Gehäuse 8 enthält außerdem im Bereich des Hallsensors 32 eine Durchgangsöffnung 36, durch die der Hallsensor 32 in das Innere des Gehäuses 8 hineinragen kann und durch die der Hallsensor 32 mit einer hier nicht näher dargestellten bzw. nicht näher bezeichneten Auswerteschaltung gekoppelt ist.

Entsprechend Fig. 2 kann außerdem vorgesehen sein, innerhalb des Gehäuses 8 eine Rückstellfeder 67 anzuordnen, die sich einerseits am Gehäuse 8 und andererseits an einer der Wellen, bevorzugt an der Abtriebswelle 10 abstützt. Durch die Rückstellfeder 67 kann der Aktuator 2 bzw. seine Abtriebswelle 10 in eine Endstellung oder in eine zwischen zwei Endstellungen liegende Ausgangsstellung oder Neutralstellung vorgespannt sein. Hierdurch kann insbesondere eine Notlauffunktion für die jeweilige Stelleinrichtung 1 realisiert werden, falls es zu einem Stromausfall kommt und der Elektromotor 9 nicht mehr angesteuert werden kann.

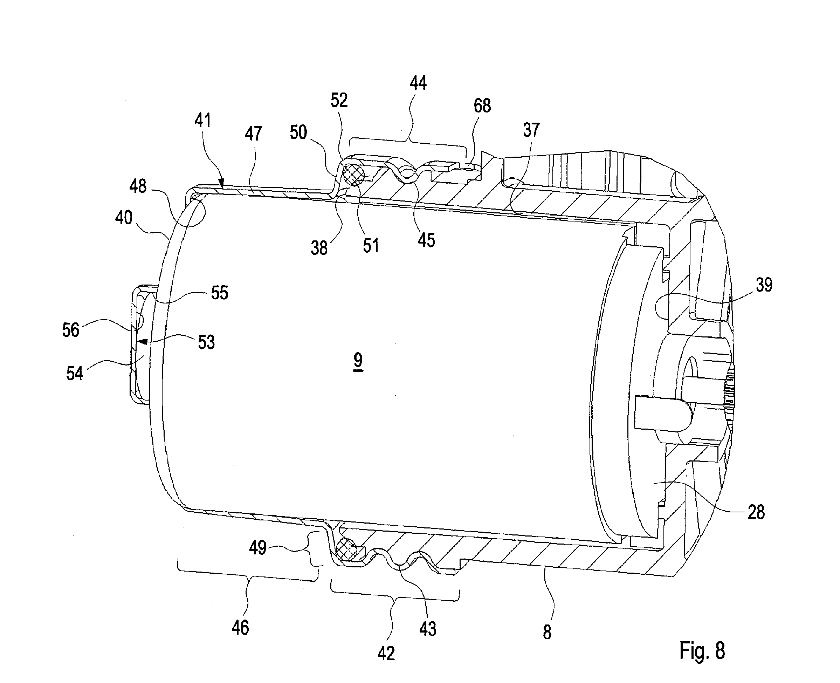

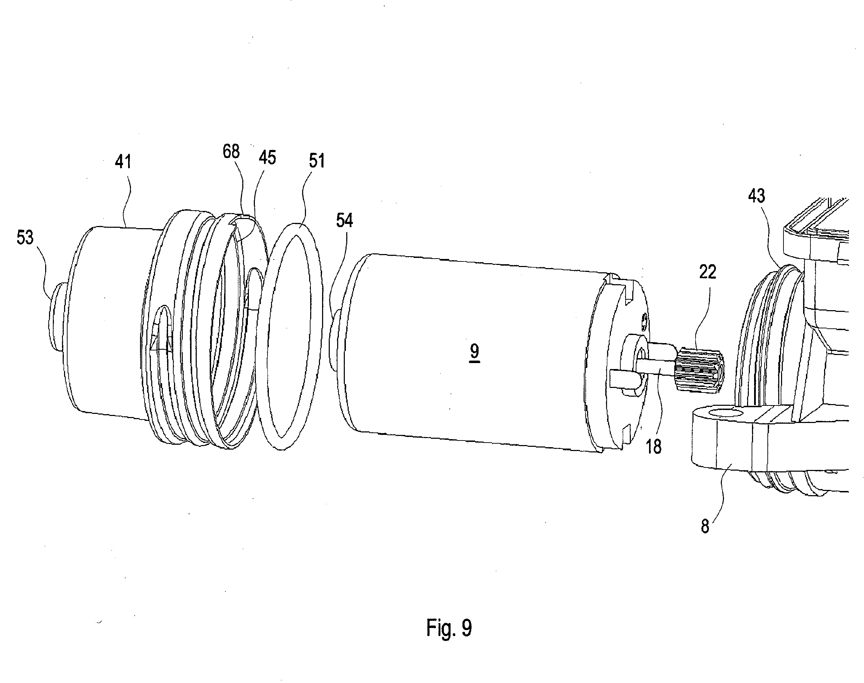

Entsprechend den Fig. 8 und 9 ist zur Unterbringung des Elektromotors 9 im Gehäuse 8 ein Motoraufnahmeraum 37 ausgebildet, der zweckmäßig zylindrisch gestaltet ist und in den der Elektromotor 9 durch eine Einführöffnung 38 bezüglich seiner Antriebswelle 18 axial, also koaxial zur Rotationsachse 12 der Abtriebswelle 10 einführbar ist. Dabei kommt der Elektromotor 9 bei der in Fig. 8 gezeigten Einbaulage an seinem vorderen Ende 28 an einem Boden 39 des Motoraufnahmeraums 37 axial zur Anlage. Im Unterschied dazu ragt der Elektromotor 9 an seinem vom Planetengetriebe 19 entfernten oder abgewandten hinteren Ende 40 axial aus der Einführöffnung 38 heraus. Zum Verschließen der Einführöffnung 38 und zum Positionieren des Elektromotors 9 im Gehäuse 8 ist ein Deckel 41 vorgesehen, der an das Gehäuse 8 anschraubbar ist. An diesem Deckel 41 kommt der Elektromotor 9 mit seinem hinteren Ende 40 axial zur Anlage.

Das Gehäuse 8 weist hierzu in einem Einführabschnitt 42, der die Einführöffnung 38 aufweist, ein Gewinde 43 auf, das bevorzugt als Außengewinde 43 ausgestaltet ist. Komplementär dazu weist der Deckel 41 einen Gewindeabschnitt 44 auf, der mit einem entsprechenden Gewinde 45 versehen ist, das bevorzugt als Innengewinde 45 ausgestaltet ist. Des Weiteren weist der Deckel 41 einen Topfabschnitt 46 auf, der eine zylindrische Wand 47 und einen Boden 48 besitzt. An diesem Boden 48 kommt das hintere Ende 40 des Elektromotors 9 im montierten Zustand axial zur Anlage.

Der Deckel 41 besitzt außerdem zwischen dem Topfabschnitt 46 und dem Gewindeabschnitt 44 einen Übergangsabschnitt 49. Dieser ist als axiale Zugfeder ausgestaltet und ermöglicht eine axiale Vorspannung des Elektromotors 9 gegen den Boden 39 des Motoraufnahmeraums 37.

In der gezeigten, bevorzugten Ausführungsform weist der Übergangsabschnitt 49 einen ringförmigen Kragen 50 auf. Dieser ist radial einerseits, hier radial innen mit dem Topfabschnitt 47 und radial andererseits, hier radial außen mit dem Gewindeabschnitt 44 fest verbunden. Insbesondere ist der gesamte Deckel 41 aus einem Stück hergestellt, das integral die einzelnen Abschnitte, also den Topfabschnitt 46, den Gewindeabschnitt 44 und den Übergangsabschnitt 50 aufweist. Beispielsweise handelt es sich beim Deckel 41 um ein Blechformteil oder um ein Kunststoffspritzformteil.

Der Übergangsabschnitt 50 bewirkt eine axiale Positionierung des Topfabschnitts 46 relativ zum Gewindeabschnitt 44. Ferner ist der Übergangsabschnitt 50 so ausgestaltet, dass ein axialer Abstand des Gewindeabschnitts 44 vom Boden 48 des Topfabschnitts 46 gegen eine Rückstellkraft des Übergangsabschnitts 49 vergrößert werden kann. Der Übergangsabschnitt 49 wirkt dabei wie eine Feder.

Zweckmäßig sind nun Deckel 41, Gehäuse 8 und Elektromotor 9 so aufeinander abgestimmt, dass sich die Zugfeder, die durch den Übergangsabschnitt 49 gebildet ist, beim Aufschrauben, also beim Anschrauben des Deckels 41 spannt und dadurch die erwünschte axiale Vorspannung des Elektromotors 9 gegen den Boden 39 im Motoraufnahmeraum 37 erzeugt. Bei angeschraubtem Deckel 41 ist der Elektromotor 9 dann zwischen den Böden 39 und 48 eingespannt.

Zum Auffinden und Fixieren einer gewünschten relativen Drehlage zwischen Deckel 41 und Gehäuse 8 kann eine hier nicht näher bezeichnete Verrastung vorgesehen sein. Eine derartige Rastverbindung umfasst zumindest ein radial vorstehendes Rastelement, das bei Erreichen der gewünschten Relativlage zwischen Gehäuse 8 und Deckel 41 in eine dazu komplementäre Rastaufnahme einrastet bzw. einschnappt. Das jeweilige Rastelement kann dabei als Nase, Rampe, Rippe oder Halbkugel oder dergleichen ausgestaltet sein. Die jeweilige Rastaufnahme kann als Aussparung, Durchbruch, Vertiefung oder Hohlraum oder dergleichen ausgestaltet sein. Zweckmäßig ist das wenigstens eine Rastelement am Gehäuse 8 ausgestaltet und steht von diesem im Wesentlichen in radialer Richtung nach außen ab. Die zugehörige Rastaufnahme ist dann am Deckel 41 vorgesehen. Sobald die vorgesehene relative Drehlage zwischen Deckel 41 und Gehäuse 8 erreicht ist, greift das jeweilige Rastelement in die zugehörige Rastaufnahme ein und sichert den Deckel 41 gegen eine unerwünschte Verdrehung, so dass sich der Deckel 41 nicht von selbst vom Gehäuse 8 lösen kann. Alternativ kann das Rastelement am Deckel 41 angeordnet sein und mit der am Gehäuse 8 angeordneten Rastaufnahme zusammenwirken. Ebenso sind gemischte Anordnungen denkbar.

Besonders zweckmäßig kann besagte Rastverbindung zum Einstellen einer vorbestimmten axialen Vorspannung des Elektromotors 9 gegen den Boden 39 im Motoraufnahmeraum 37 genutzt werden. Hierzu kann die Positionierung der Rastverbindung so auf die zusammenwirkenden Gewinde 43, 45 abgestimmt sein, dass der Elektromotor 9 die gewünschte axiale Vorspannung genau dann erreicht, wenn der Deckel 41 über die Rastverbindung mit dem Gehäuse 8 verrastet. Dies kann beispielsweise wie folgt ablaufen:

Nach dem Einsetzen des Elektromotors 9 in den Motoraufnahmeraum 37 wird der Deckel 41 auf das Gehäuse 8 aufgesetzt und angeschraubt. Sobald der Elektromotor 9 einerseits am Boden 39 und andererseits am Deckel 41 axial zur Anlage kommt, ohne jedoch bereits eine Zugspannung auf den Übergangsabschnitt 49 zu übertragen, liegt ein definierter Zustand vor, in dem zwischen Deckel 41 und Gehäuse 8 eine vorbestimmte Relativlage vorliegt. Ausgehend von diesem Zustand soll der Deckel 41 noch maximal um 90°, also um eine Viertel-Drehung weitergedreht bzw. weitergeschraubt werden, bevor die Rastverbindung zwischen Deckel 41 und Gehäuse 8 einrastet. Innerhalb dieser Viertel-Drehung wird ein von der Gewindesteigung abhängiger axialer Weg zwischen Deckel 41 und Gehäuse 8 zurückgelegt, der eine definierte Vorspannung auf den Übergangsabschnitt 49 überträgt. Beispielsweise können die miteinander zusammenwirkenden Gewinde 43, 45 eine Steigung von 2 mm aufweisen. Bei einer Viertel-Umdrehung ergibt sich dadurch ein axialer Weg von 0,5 mm. Die Längentoleranz des Elektromotors 9 beträgt zweckmäßig maximal 0,5 mm, zweckmäßig jedoch weniger als 0,5 mm, zwischen der maximalen Länge und der minimalen Länge. Durch die vorgeschlagene Bauweise kann somit die Längentoleranz des Elektromotors 9 vollständig in der genannten Viertel-Drehung aufgenommen werden. Sofern andere Längentoleranzen auszugleichen sind, können dementsprechend andere Gewindesteigungen und/oder andere Drehbereiche vorgesehen werden. Ein Elektromotor 9 mit der minimalen Länge verfügt somit über die kleinste Vorspannung. Dagegen ist der Elektromotor 9 mit der maximalen Länge mit der größten Vorspannung fixiert. Die kleinste Vorspannkraft ist so ausgelegt, dass sie zur Lagerung und Fixierung des Elektromotors 9 ausreicht. Die größte Vorspannkraft ist zweckmäßig so ausgelegt, dass der Elektromotor 9 dadurch nicht beschädigt wird.

In den Fig. 8 und 9 ist lediglich eine mit 68 bezeichnete Rastaufnahme angedeutet, die hier rein exemplarisch am Deckel 41 vorgesehen ist, und zwar in Form eines axial offenen Durchbruchs, der den Deckel 41 an einem dem Gehäuse 8 zugewanden stirnseitigen Ende radial durchdringt. In diese Rastaufnahme 68 dringt dann in der vorbestimmten Relativlage zwischen Gehäuse 8 und Deckel 41 ein hier nicht dargestelltes, gehäuseseitiges Rastelement ein.

Im gezeigten Beispiel ist im Bereich der Einführöffnung 38 eine Dichtung 51 zwischen dem Einführabschnitt 42 und dem Deckel 41 angeordnet. Besonders zweckmäßig ist dabei die hier gezeigte Ausführungsform, bei welcher sich die Dichtung 51 an einem Übergang 52 zwischen dem Übergangsabschnitt 49 und dem Gewindeabschnitt 44 befindet. Beim Festschrauben des Deckels 41 wird die Dichtung 51 komprimiert, wodurch die gewünschte Dichtigkeit realisierbar ist.

Bei den gezeigten Ausführungsformen besitzt der Boden 48 des Topfabschnitts 46 eine Mulde 53. Diese ist bezüglich des Deckels 41 zentral angeordnet und topfförmig ausgestaltet. In diese Mulde 53 ragt ein zylindrischer Vorsprung 54 des Elektromotors 9 hinein. Besagter Vorsprung 54 geht vom hinteren Ende 40 des Elektromotors 9 axial ab. Besagter Vorsprung 54 kann beispielsweise ein hier nicht näher dargestelltes Lager für die Antriebswelle 18 des Elektromotors 9 aufweisen. Zweckmäßig sind der Vorsprung 54 und die Mulde 53 hinsichtlich ihrer Dimensionierung so aufeinander abgestimmt, dass zum einen eine radiale Abstützung des Vorsprungs 54 an einer Wand 55 der Mulde 53 erfolgt. Zum anderen ist der Vorsprung 54 in axialer Richtung von einem Boden 56 der Mulde 53 beabstandet. Dementsprechend realisiert die Mulde 53 lediglich eine Zentrierung des Vorsprungs 54 bezüglich der Rotationsachse der Antriebswelle 18. Die axiale Verspannung des Elektromotors 9 erfolgt dagegen außerhalb der Mulde 53 über den Boden 48 des Deckels 41.

Während der Deckel 41 beispielsweise aus einem Metall hergestellt ist, besteht das Gehäuse 8 im Übrigen bevorzugt aus einem Kunststoff. Durch den federelastischen Übergangsabschnitt 49 können thermisch bedingte Dehnungen, die innerhalb des Gehäuses 8, des Deckels 41 und des Elektromotors 9 zu unterschiedlichen Längenänderungen führen können, federelastisch aufgenommen werden.

Zudem übernimmt hier der Deckel 41 im montierten Zustand auch die Funktion eines Kühlblechs für den Elektromotor 9, um die Verlustenergie des Elektromotors 9 an die umgebende Atmosphäre abzugeben. Hierbei wird die Wärme des Elektromotors 9 über die Fläche seines hinteren Endes 40 an die Fläche des Bodens 48 des Deckels 41 übertragen, der z.B. aus Metallblech hergestellt ist. Die Wärme kann somit an die umgebende Atmosphäre abgegeben werden, wodurch der Elektromotor 9 gekühlt wird.

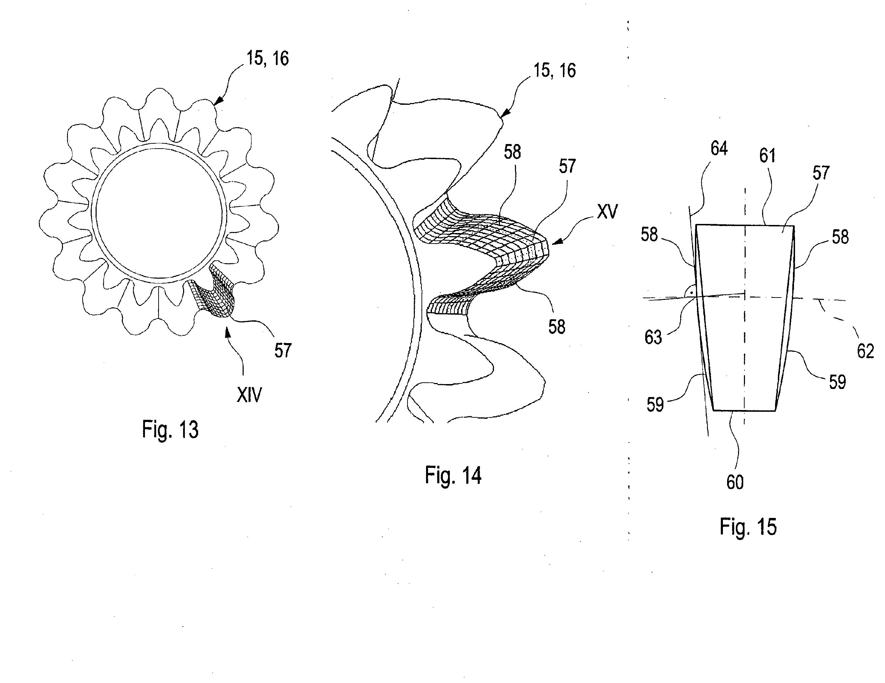

Entsprechend den Fig. 10 bis 15 besitzen die Kegelräder 15, 16 des Kegelgetriebes 11 eine besondere Verzahnung bzw. Zahnform. Fig. 15 zeigt dabei einen einzelnen Zahn 57 eines der Kegelräder 15, 16. Erkennbar besitzt dieser Zahn 57 in seinem radialen Verlauf eine nach außen gewölbte oder konvexe Zahnflanke 58. Die Zahnflanke 58 besitzt somit eine Wölbung 59, die von einem axialen Ende 60 zum anderen axialen Ende 61 des jeweiligen Zahns 57 zunächst zunimmt und wieder abnimmt.

In Fig. 15 ist ein Segment eines Teilkreises 62 des jeweiligen Kegelrads 15, 16 eingetragen. Erkennbar ist die Wölbung 59 der Zahnflanken 58 bei einer bevorzugten Ausführungsform so gestaltet, dass besagter Teilkreis 62 in einem Schnittpunkt 63 mit der Zahnflanke 58 senkrecht auf einer Tangente 64 steht, die im Schnittpunkt 63 an der Zahnflanke 58 anliegt.

Die hier vorgeschlagene gewölbte oder konvexe Zahnflankengeometrie der Kegelräder 15 führt zu einer punktförmigen Kontaktierung im Eingriffsbereich 17 über die Zahnflanken 58. Die gewählte Formgebung für die Zahnflanken 58 kann Lageabweichungen zwischen den Rotationsachsen 12 und 13 der Abtriebswelle 10 und der Betätigungswelle 7 ausgleichen. Zum Beispiel sind die Kegelräder 15, 16 für einen Winkel 14 zwischen den Rotationsachsen 12, 13 ausgelegt, der beispielsweise 90° beträgt. Die Auslegung der Kegelräder 15, 16 definiert dabei einen Sollzustand. Aufgrund von Montagetoleranzen ergibt sich jedoch nach dem Zusammenbau des Aktuators 2 bzw. die Stelleinrichtung 1 eine Ist-Situation, die von der Soll-Vorgabe in der Regel abweicht. So können die Rotationsachsen 12, 13 der Abtriebswelle 10 und der Betätigungswelle 7 im montierten Zustand einen von 90° abweichenden Winkel 14 einschließen. Des Weiteren ist es durchaus möglich, dass sich die beiden Rotationsachsen 12, 13 nicht schneiden, was ebenfalls zu einer Lageabweichung der mit den Wellen 10, 7 fest verbundenen Kegelrädern 15, 16 führt. In Fig. 11 sind exemplarisch mit strichpunktierten Linien Lageabweichungen der einen Rotationsachse 12, 13 dargestellt, die von der hier vorgeschlagenen Verzahnung des Kegelgetriebes 11 noch tolerierbar sind. Die eine Linie 65 definiert beispielsweise eine Soll-Orientierung der einen Rotationsachse, während die andere Linie 66 eine noch tolerierbare Ist-Orientierung der jeweiligen Rotationsachse repräsentiert. Erkennbar ist außerdem, dass auch eine gewisse Exzentrizität zwischen den beiden Rotationsachsen 12, 13 tolerierbar ist.

Zusätzlich reicht es aus, eines der beiden Kegelräder 15, 16 in der beschriebenen Weise zu verzahnen. Bevorzugt werden jedoch beide Kegelräder 15, 16 mit der beschriebenen Verzahnung ausgestattet. Bevorzugt ist eine Ausführungsform, bei welcher beide Kegelräder 15, 16 als Gleichteile ausgestaltet sind. Die Kegelräder 15, 16 können insbesondere aus Kunststoff hergestellt sein, wobei eine Spritzformung bevorzugt ist.

## Patentansprüche

1. Aktuator für eine Stelleinrichtung (1) eines Fahrzeugs,
- mit einem Gehäuse (8),
- mit einem im Gehäuse (8) angeordneten Elektromotor (9),
- wobei das Gehäuse (8) eine Einführöffnung (38) aufweist, durch die der Elektromotor (9) in einen zylindrischen Motoraufnahmeraum (37) des Gehäuses (8) axial einführbar ist,
- wobei der Elektromotor (9) axial einerseits an einem Boden (39) des Motoraufnahmeraums (37) anliegt und axial andererseits aus der Einführöffnung (38) herausragt, **dadurch gekennzeichnet dass**,
ein an das Gehäuse (8) angeschraubter Deckel (41) zum Verschließen der Einführöffnung (38) vorgesehen ist, an dem der Elektromotor (9) axial anliegt,
- wobei das Gehäuse (8) in einem die Einführöffnung (38) aufweisenden axialen Einführabschnitt (42) ein Gewinde (43) aufweist,
- wobei der Deckel (41) einen Gewindeabschnitt (44) aufweist, der ein zum Gewinde (43) des Gehäuses (8) komplementäres Gewinde (45) aufweist,
- wobei der Deckel (41) einen Topfabschnitt (46) mit einer zylindrischen Wand (47) und einem Boden (48) aufweist, an dem der Elektromotor (9) axial anliegt.

2. Aktuator nach Anspruch 1,
**dadurch gekennzeichnet,**
**dass** der Deckel (41) zwischen dem Topfabschnitt (46) und dem Gewindeabschnitt (44) einen als axiale Zugfeder ausgestalteten Übergangsabschnitt (49) aufweist.

3. Aktuator nach Anspruch 2,
**dadurch gekennzeichnet,**
**dass** der Deckel (41), Gehäuse (8) und Elektromotor (9) so aufeinander abgestimmt sind, dass sich die durch den Übergangsabschnitt (49) gebildete Zugfeder beim Anschrauben des Deckels (41) spannt und den Elektromotor (9) axial vorspannt.

4. Aktuator nach Anspruch 2 oder 3,
**dadurch gekennzeichnet,**
**dass** der Übergangsabschnitt (49) einen ringförmigen Kragen (50) aufweist, der radial einerseits mit dem Topfabschnitt (46) und radial andererseits mit dem Gewindeabschnitt (44) fest verbunden ist.

5. Aktuator nach einem der Ansprüche 2 bis 4,
**dadurch gekennzeichnet,**
- **dass** der Übergangsabschnitt (49) den Topfabschnitt (46) relativ zum Gewindeabschnitt (44) axial positioniert,
- **dass** ein axialer Abstand des Gewindeabschnitts (44) vom Boden (48) des Topfabschnitts (46) gegen eine Rückstellkraft des federnden Übergangsabschnitts (49) vergrößerbar ist.

6. Aktuator nach einem der Ansprüche 1 bis 5,
**dadurch gekennzeichnet,**
**dass** im Bereich der Einführöffnung (38) zwischen dem Einführabschnitt (42) und dem Deckel (41) zumindest eine Dichtung (51) angeordnet ist.

7. Aktuator zumindest nach den Ansprüchen 2 und 6,
**dadurch gekennzeichnet,**
**dass** die Dichtung (51) an einem Übergang (52) zwischen dem Übergangsabschnitt (49) und dem Gewindeabschnitt (44) angeordnet ist.

8. Aktuator nach einem der Ansprüche 1 bis 7,
**dadurch gekennzeichnet,**
**dass** der Boden (48) des Deckels (41) so ausgestaltet ist, dass der Elektromotor (9) daran flächig anliegt, derart, dass der Deckel (41) als Wärme vom Elektromotor (9) abführendes Wärmeleitelement arbeitet und/oder wirkt.

9. Aktuator nach einem der Ansprüche 1 bis 8,
**dadurch gekennzeichnet,**
**dass** der Boden (48) des Topfabschnitts (46) zentral eine topfförmige Mulde (53) aufweist, in die ein zylindrischer Vorsprung (54) des Elektromotors (9) hineinragt.

10. Aktuator nach Anspruch 9,
**dadurch gekennzeichnet,**
- **dass** der Vorsprung (54) ein Lager für eine Antriebswelle (18) des Elektromotors (9) aufweist, und/oder
- **dass** sich der Vorsprung (54) radial an einer Wand (55) der Mulde (53) abstützt, und/oder
- **dass** der Vorsprung (54) axial von einem Boden (56) der Mulde (53) beabstandet ist.

11. Aktuator nach einem der Ansprüche 1 bis 10,
**dadurch gekennzeichnet,**
**dass** das Gehäuse (8) aus Kunststoff besteht, während der Deckel (41) aus Metall besteht.

12. Aktuator nach einem der Ansprüche 1 bis 11,
**dadurch gekennzeichnet,**
**dass** der Aktuator (2) ein Bestandteil einer Stelleinrichtung (1) eines Fahrzeugs ist, die zumindest ein Stellglied (4) aufweist, das mit dem Aktuator (2) antreibbar ist.

13. Aktuator nach Anspruch 12,
**dadurch gekennzeichnet,**
**dass** die Stelleinrichtung (1) eine Klappenstelleinrichtung ist, deren wenigstens ein Stellglied jeweils eine Klappe (4) zum Steuern eines durchströmbaren Querschnitts in einer durchströmbaren Leitung ist.

14. Aktuator nach Anspruch 13,
**dadurch gekennzeichnet,**
**dass** die jeweilige Klappe (4) eine Tumbleklappe und/oder eine Drallklappe in einem Frischgastrakt einer Brennkraftmaschine des Fahrzeugs oder eine Drosselklappe in einem Frischgastrakt oder in einem Abgastrakt einer Brennkraftmaschine des Fahrzeugs ist.

15. Stelleinrichtung zum Verstellen wenigstens eines Stellglieds (4), insbesondere in einem Kraftfahrzeug, mit einem Aktuator (2) nach einem der Ansprüche 1 bis 14 zum Antreiben des wenigstens einen Stellglieds (4).

## Claims

1. An actuator for an adjusting device (1) of a vehicle, comprising
- a housing (8),
- an electric motor (9) arranged in the housing (8),
- wherein the housing (8) has an insertion opening (38) through which the electric motor (9) can be axially inserted into a cylindrical motor receiving compartment (37) of the housing (8),
- wherein the electric motor (9) axially rests on a bottom (39) of the motor receiving compartment (37) on one side and axially projects from the insertion opening (38) on the other side,
**Characterized in, that**
- a cover (41) screwed to the housing (8) is provided for closing the insertion opening (38), on which cover the electric motor (9) rests axially,
- the housing (8) has a thread (43) in an axial insertion section (42) comprising the insertion opening (38),
- the cover (41) has a threaded section (44) which has a thread (45) which is complementary to the thread (43) of the housing (8),
- the cover (41) has a cup-shaped section (46) with a cylindrical wall (47) and a bottom (48) on which the electric motor (9) rests axially.

2. The actuator according to claim 1,
**characterized in**
**that** between the cup-shaped section (46) and the threaded section (44), the cover (41) has a transition section (49) which is configured as axial tension spring.

3. The actuator according to claim 2,
**characterized in**
**that** the cover (41), housing (8), and electric motor (9) are adapted to one another in such a manner that the tension spring formed by the transition section (49) tensions during screwing on the cover (41), thereby axially preloading the electric motor (9).

4. The actuator according to claim 2 or claim 3,
**characterized in**
**that** the transition section (49) has an annular collar (50) which is radially fixedly connected to the cup-shaped section (46) on the one side and radially fixedly connected to the threaded section (44) on the other side.

5. The actuator according to any one of the claims 2 to 4,
**characterized in**
- **that** the transition section (49) axially positions the cup-shaped section (46) relative to the threaded section (44),
- **that** an axial distance of the threaded section (44) from the bottom (48) of the cup-shaped section (46) can be increased against a reset force of the resilient transition section (49).

6. The actuator according to any one of the claims 1 to 5,
**characterized in**
**that** in the region of the insertion opening (38), between the insertion section (42) and the cover (41), at least one seal (51) is arranged.

7. The actuator at least according to the claims 2 and 6,
**characterized in**
**that** the seal (51) is arranged at a transition (52) between the transition section (49) and the threaded section (44).

8. The actuator according to any one of the claims 1 to 7,
**characterized in**
**that** the bottom (48) of the cover (41) is configured in such a manner that the electric motor (9) rests flatly thereon, such, that the cover (41) works and/or acts as heat conductive element dissipating heat from the electric motor (9).

9. The actuator according to any one of the claims 1 to 8, **characterized in**
**that** the bottom (48) of the cup-shaped section (46) has a central cup-shaped trough (53) into which a cylindrical projection (54) of the electric motor (9) projects.

10. The actuator according to claim 9,
**characterized in**
- **that** the projection (54) comprises a bearing for a drive shaft (18) of the electric motor (9), and/or
- **that** the projection (54) is radially supported on a wall (55) of the trough (53), and/or
- **that** the projection (54) is axially spaced apart from a bottom (56) of the trough (53).

11. The actuator according to any one of the claims 1 to 10,
**characterized in**
**that** the housing (8) is made of plastic while the cover (41) is made of metal.

12. The actuator according to any one of the claims 1 to 11,
**characterized in**
**that** the actuator (2) is an integral part of an adjusting device (1) of a vehicle, which adjusting device has at least one actuating member (4) which can be driven with the actuator (2).

13. The actuator according to claim 12,
**characterized in**
**that** the adjusting device (1) is a flap actuator device, the at least one actuating member of which is in each case a flap (4) for controlling a cross-section through which a flow can pass of a line through which a flow can pass.

14. The actuator according to claim 13,
**characterized in**
**that** the respective flap (4) is a tumble flap and/or swirl flap in a fresh gas duct of an internal combustion engine of the vehicle, or a throttle flap in a fresh gas duct or in an exhaust gas duct of an internal combustion engine of the vehicle.

15. An adjusting device for adjusting at least one actuating member (4), in particular in a motor vehicle, comprising an actuator (2) according to any one of the claims 1 to 14 for driving the at least one actuating member (4).

## Revendications

1. Actionneur pour un dispositif de réglage (1) d'un véhicule, comprenant
- un boîtier (8),
- un moteur électrique (9) disposé à l'intérieur dudit boîtier (8),
- ledit boîtier (8) présentant une ouverture d'introduction (38) par laquelle le moteur électrique (9) peut être introduit axialement dans un espace de réception de moteur (37) cylindrique du boîtier (8),
- ledit moteur électrique (9), d'un côté, s'appliquant axialement contre un fond (39) dudit espace de réception de moteur (37) et, de l'autre côté, faisant saillie axialement hors de ladite ouverture d'introduction (38),
**caractérisé par le fait que** l'on prévoit un couvercle (41) qui est vissé sur le boîtier (8) et destiné à fermer ladite ouverture d'introduction (38) et contre lequel le moteur électrique (9) s'applique axialement,
- le boîtier (8) présentant un filetage (43) dans une portion d'introduction (42) axiale présentant ladite ouverture d'introduction (38),
- ledit couvercle (41) présentant une portion filetée (44) qui présente un filetage (45) complémentaire du filetage (43) du boîtier (8),
- ledit couvercle (41) présentant une portion en pot (46) ayant une paroi cylindrique (47) et un fond (48) contre lequel ledit moteur électrique (9) s'applique axialement.

2. Actionneur selon la revendication 1, **caractérisé par le fait que**, entre la portion en pot (46) et la portion filetée (44), ledit couvercle (41) présente une portion de transition (49) réalisée en tant que ressort de traction axial.

3. Actionneur selon la revendication 2, **caractérisé par le fait que** le couvercle (41), le boîtier (8) et le moteur électrique (9) sont accordés les uns avec les autres de telle manière que le ressort de traction formé par ladite portion de transition (49) est tendu lorsque le couvercle (41) est vissé et précontraint axialement le moteur électrique (9).

4. Actionneur selon la revendication 2 ou 3, **caractérisé par le fait que** ladite portion de transition (49) présente une collerette (50) annulaire qui est solidaire radialement de la portion en pot (46) d'un côté et radialement de la portion filetée (44) de l'autre côté.

5. Actionneur selon l'une quelconque des revendications 2 à 4, **caractérisé par le fait**
- **que** la portion de transition (49) positionne axialement ladite portion en pot (46) par rapport à ladite portion filetée (44),
- **qu'**une distance axiale de la portion filetée (44) par rapport au fond (48) de la portion en pot (46) peut être augmentée à l'encontre d'une force de rappel de la portion de transition (49) formant ressort.

6. Actionneur selon l'une quelconque des revendications 1 à 5, **caractérisé par le fait qu'**au moins un joint d'étanchéité (51) est disposé au niveau de ladite ouverture d'introduction (38) entre la portion d'introduction (42) et le couvercle (42).

7. Actionneur au moins selon les revendications 2 et 6, **caractérisé par le fait que** ledit joint d'étanchéité (51) est disposé sur une transition (52) entre la portion de transition (49) et la portion filetée (44).

8. Actionneur selon l'une quelconque des revendications 1 à 7, **caractérisé par le fait que** le fond (48) du couvercle (41) est réalisé de manière à ce que ledit moteur électrique (9) s'applique en nappe contre celui-ci de telle sorte que le couvercle (41) travaille et/ou agit comme élément conducteur de chaleur qui évacue de la chaleur dudit moteur électrique (9).

9. Actionneur selon l'une quelconque des revendications 1 à 8, **caractérisé par le fait que** le fond (48) de la portion en pot (46) présente au centre un creux (53) en forme de pot dans lequel fait saillie une projection (54) cylindrique du moteur électrique (9).

10. Actionneur selon la revendication 9, **caractérisé par le fait**
- **que** ladite projection (54) présente un palier pour un arbre moteur (18) du moteur électrique (9) et/ou
- **que** ladite projection (54) s'appuie radialement sur une paroi (55) dudit creux (53) et/ou
- **que** ladite projection (54) est espacée axialement d'un fond (56) du creux (53).

11. Actionneur selon l'une quelconque des revendications 1 à 10, **caractérisé par le fait que** ledit boîtier (8) est réalisé en matière plastique, tandis que le couvercle (41) est réalisé en métal.

12. Actionneur selon l'une quelconque des revendications 1 à 11, **caractérisé par le fait que** ledit actionneur (2) est une partie constituante d'un dispositif de réglage (1) d'un véhicule, qui présente au moins un organe de réglage (4) qui est apte à être entraîné par ledit actionneur (2).

13. Actionneur selon la revendication 12, **caractérisé par le fait que** ledit dispositif de réglage (1) est un dispositif de réglage à clapet dont ledit au moins un organe de réglage est respectivement un clapet (4) de commande d'une section apte à être traversée dans une conduite apte à être traversée.

14. Actionneur selon la revendication 13, **caractérisé par le fait que** le clapet (4) respectif est un clapet tumble et/ou un clapet à torsion dans un trajet des gaz frais d'un moteur à combustion interne du véhicule ou un clapet d'étranglement dans un trajet des gaz frais ou dans un trajet des gaz d'échappement d'un moteur à combustion interne du véhicule.

15. Dispositif de réglage destiné à régler au moins un organe de réglage (4), en particulier dans un véhicule automobile, comprenant un actionneur (2) selon l'une quelconque des revendications 1 à 14, pour entraîner ledit au moins un organe de réglage (4).
